# EUROPEAN PATENT APPLICATION

(11) **EP 4 628 187 A1**
(43) Date of publication of application: **08.10.2025**
(21) Application number: 23944478.9
(22) Date of filing: 27.09.2023
(51) Int. Cl.: B01D 39/16, B01D 46/00

(54) **FILTER FABRIC AND FILTER USING SAME**

(30) Priority: 03.07.2023 KR 20230085556
(71) Applicant: LG Electronics Inc., Yeongdeungpo-gu Seoul 07336 (KR)
(72) Inventor: SHIN, Namgyu, Seoul 08592 (KR); PARK, Hyungho, Seoul 08592 (KR); LEE, Keon Wang, Seoul 08592 (KR); KIM, Hongseok, Seoul 08592 (KR); KIM, HanBin, Seoul 08592 (KR); LEE, Giseop, Seoul 08592 (KR)
(74) Representative: Vossius & Partner Patentanwälte Rechtsanwälte mbB
(86) International application number: PCT/KR2023/015015
(87) International publication number: WO 2025/009662

(57) **Abstract**

The present invention relates to a filter fabric and a filter using same. The filter fabric (10) of the present invention is formed by layering a plurality of functional layers (100') on a support layer (100), wherein all of the functional layers (100') or some of the functional layers (100') are separated into a plurality of sub-layers. The sub-layers are formed such that characteristics of adjacent sub-layers differ therefrom or sequentially change.

## Description

### Technical Field

The present disclosure relates to a filter fabric used in a filter for air purification and to a filter using the filter fabric.

### Background Art

Air purification filters come in various types and may be classified into pre-filters, medium filters, and HEPA filters, depending on their filtration performance. In addition, various materials are used to make filters. Although natural materials such as cotton and wool were previously used, chemical fibers are now primarily used. Examples include PP (polypropylene), PE (polyethylene), and PET (polyethylene terephthalate). A commonly used filter fabric is a nonwoven fabric made from chemical fibers.

Recently, filter fabrics have been produced through nanofiber spinning. Korean Patent No. 10-2157444 is presented as Prior Art 1, which discloses a filter fabric formed by stacking multiple nanofiber webs on a base.

However, the multiple nanofiber webs stacked on the base each have distinct functions and are generally made of different materials or components. Accordingly, on the interfaces between these nanofiber webs, interfacial effects may occur, which may lead to degradation of the performance of the filter fabric. For example, when two layers formed by stacking nanofibers through nanofiber spinning have completely different properties and functions, an interface may be formed therebetween, and a significant increase in pressure loss may occur at the corresponding interface. More specifically, the pressure loss occurring on the interface is mainly caused by differences in porosity and pore distribution between the adjacent layers, and may also result from differences between electrical conductivities thereof.

Meanwhile, nanofibers produced through nanofiber spinning tend to exhibit lower pressure loss in the fabric as their diameter decreases. Accordingly, when producing nanofibers through nanofiber spinning, additives such as CTAB or LiCl are added to reduce the diameter of the nanofibers to make the nanofibers finer. However, these additives increase the electrical conductivity of the spun nanofibers, so an electric force is dissipated and thus does not remain in the fabric.

For reference, when nanofibers have electric forces, a filter may have high initial properties, for example, in dust collection efficiency. However, when additives are added in nanofiber spinning, the electrical conductivity of the corresponding layer increases, causing electricity in the layer having an electric force to be conducted away and dissipated, which leads to a gradual decrease in efficiency.

In addition, as Prior Art 2, Korean Patent No. 10-0749966 discloses a filter formed by stacking nanofibers composed of a mixed resin of polyamide and chitosan in a web shape as a single layer or multiple layers. As Prior Art 3, Patent Application Publication No. 10-2017-0085467 discloses a nanofiber filter made by using nanofibers and a method for manufacturing the nanofiber filter. However, these filters have a problem in that filter properties deteriorate due to interference between adjacent layers.

### Disclosure

### Technical Problem

An objective of the present disclosure is to eliminate interfacial effects between functional layers that constitute a filter fabric and perform a predetermined function.

An objective of the present disclosure is to configure a filter fabric such that one functional layer performing a predetermined function is composed of multiple adjacent sub-layers having slightly different ratios of compositions or properties.

An objective of the present disclosure is to configure one functional layer, which is formed by stacking, to include multiple sub-layers so that functions performed by the stacked sub-layers vary sequentially or differentially.

An objective of the present disclosure is to enhance the performance of a filter fabric by eliminating interfacial effects through the use of functional layers having multiple sub-layers formed by nanofiber spinning.

An objective of the present disclosure is to form a functional layer through nanofiber spinning such that the single functional layer is composed of multiple sub-layers having sequential or differential changes in solution compositions or spinning conditions.

### Technical Solution

In order to accomplish the above objectives, according to the present disclosure, a functional layer performing a predetermined function in a filter fabric may be composed of multiple sub-layers.

The multiple sub-layers may have functions or properties that vary sequentially or differentially.

A filter fabric of the present disclosure includes: a support layer, functional layers that are formed by being sequentially stacked on the support layer and have predetermined functions, wherein at least one of the functional layers may include multiple sub-layers having different compositions or properties.

The functional layer may include at least one of a base layer, a purification layer, and a protection layer.

The sub-layers may have material compositions that vary sequentially.

Each of the sub-layers may have a material composition different from a material composition of an adjacent sub-layer.

The sub-layers may be set to have sequentially different electrical conductivities.

Multiple sub-layers that share properties of adjacent functional layers may be provided between the functional layers.

Multiple sub-layers that share properties of adjacent functional layers may be formed by sequentially varying ratios of the properties of the functional layers between the functional layers.

A filter fabric of the present disclosure includes: a support layer, functional layers that are formed by being sequentially stacked on the support layer and have predetermined functions, wherein multiple sub-layers that sequentially share properties of adjacent functional layers may be formed between the functional layers.

Each of the functional layers may include a base layer formed on the support layer, a purification layer formed on the base layer, and a protection layer formed on the purification layer, wherein sub-layers that sequentially share properties of the base layer and the purification layer may be formed between the base layer and the purification layer, and sub-layers that sequentially share properties of the purification layer and the protection layer may be formed between the purification layer and the protection layer.

A filter fabric of the present disclosure includes: a support layer, a base layer formed of nanofibers formed on the support layer, capable of capturing oil vapor, and composed of multiple sub-layers having different oil vapor capture capabilities, a purification layer formed on the base layer, and a protection layer formed on the purification layer and composed of multiple sub-layers having different water repellencies.

The sub-layers of the base layer may be formed to have sequentially different oil vapor capture capabilities, and a sub-layer adjacent to the support layer may be formed to have a greater oil vapor capture capability than other sub-layers.

The sub-layers of the protection layer may be formed to have sequentially different water repellencies, and a water repellency of an outermost sub-layer among the sub-layers of the protection layer may be greatest.

The base layer, the purification layer, and the protection layer may be formed by stacking nanofibers formed through nanofiber spinning.

A filter fabric of the present disclosure includes: a support layer, a protection layer formed on the support layer, a purification layer formed on the protection layer and composed of multiple sub-layers having different electrical conductivities, and a protection layer formed on the purification layer and having an electric force.

Among multiple sub-layers constituting the purification layer, electrical conductivity may increase sequentially from a sub-layer adjacent to the protection layer to a sub-layer adjacent to the protection layer.

The base layer, the purification layer, and the protection layer may be formed by stacking nanofibers formed through nanofiber spinning.

The filter fabric of the present disclosure may include the support layer, the base layer formed on the support layer, capable of capturing oil vapor, and composed of multiple sub-layers having different oil vapor capture capabilities, the purification layer formed on the base layer, and the protection layer formed on the purification layer, wherein among the sub-layers of the base layer, a sub-layer adjacent to the support layer and a sub-layer adjacent to the purification layer may respectively have functions for adhesion thereof to the support layer and the purification layer.

The filter fabric of the present disclosure may include the support layer, the protection layer formed on the support layer, the purification layer formed on the protection layer to capture foreign substances, and the protection layer formed on the purification layer and composed of multiple sub-layers, wherein the sub-layers of the protection layer may be formed such that an electrostatic force gradually decreases and a water-repellency gradually increases starting from the purification layer.

A filter of the present disclosure includes: a filter frame, and the above-described filter fabric which is installed on the filter frame and allows air to pass therethrough so that the air is purified.

### Advantageous Effects

The filter fabric of the present disclosure and the filter using the filter fabric may have at least one of the following effects.

According to the present disclosure, there may be no abrupt change in properties between two stacked functional layers. For example, in forming at least one of two functional layers, multiple sub-layers may be formed through sequential or differential design of the solution compositions and spinning conditions of a material for nanofiber spinning. Therefore, an interfacial effect between two adjacent functional layers may be eliminated, and pressure loss may be reduced, thereby improving the performance of a filter fabric.

According to the present disclosure, at least one of the base layer, the purification layer, and the protection layer constituting a functional layer may be composed of multiple sub-layers, and the properties of the sub-layers adjacent to each other change at a predetermined ratio. Accordingly, there is an effect that the properties of each functional layer are maintained for a long time.

According to the present disclosure, a functional layer having a predetermined function may be composed of multiple sub-layers, and the properties of the sub-layers may change sequentially or differentially. Accordingly, an interfacial effect between functional layers disappears, thereby providing a filter fabric with a high quality factor for efficiency.

Particularly, according to the present disclosure, since the multiple sub-layers are configured to have properties that vary sequentially or differentially, there is an advantage in that a filter fabric can secure contrasting properties while reducing interfacial effects.

### Description of Drawings

FIG. 1 is a schematic cross-sectional view showing a preferred embodiment of a filter fabric of the present disclosure.
FIG. 2 is a schematic cross-sectional view showing another embodiment of the present disclosure, in which multiple sub-layers are formed between a base layer and a purification layer and between the purification layer and a protection layer, which constitute a functional layer.
FIG. 3 is a schematic cross-sectional view showing another embodiment of the present disclosure, in which a base layer includes multiple sub-layers that sequentially provide vapor adsorption properties, and a protection layer includes multiple sub-layers that sequentially provide water-repellent properties.
FIG. 4 is a schematic cross-sectional view showing another embodiment of the present disclosure, in which a purification layer is composed of sub-layers whose electrical conductivity is lowest in a sub-layer adjacent to the protection layer having a high electric force and increases sequentially so as to maintain the electric force of the protection layer.
FIG. 5 is a schematic cross-sectional view showing another embodiment of the present disclosure, in which a protection layer is composed of multiple sub-layers to enhance oil vapor capture properties.
FIG. 6 is a schematic cross-sectional view showing another embodiment of the present disclosure, in which a protection layer is composed of multiple sub-layers configured such that the electrostatic properties and water-repellent properties are inversely proportional.
FIG. 7 is a graph showing the performance of a filter fabric having sub-layers with different electrical conductivities in relation to the present disclosure.

### Best Mode

Hereinafter, embodiments of the present disclosure are described in detail with reference to exemplary drawings. When adding reference numerals to components in each drawing, it should be noted that identical components are given the same reference numerals as much as possible even if they are shown in different drawings. In addition, when describing the embodiments of the present disclosure, if a detailed description of the relevant known configuration or function is judged to hinder understanding of the embodiments of the present disclosure, detailed descriptions thereof will be omitted.

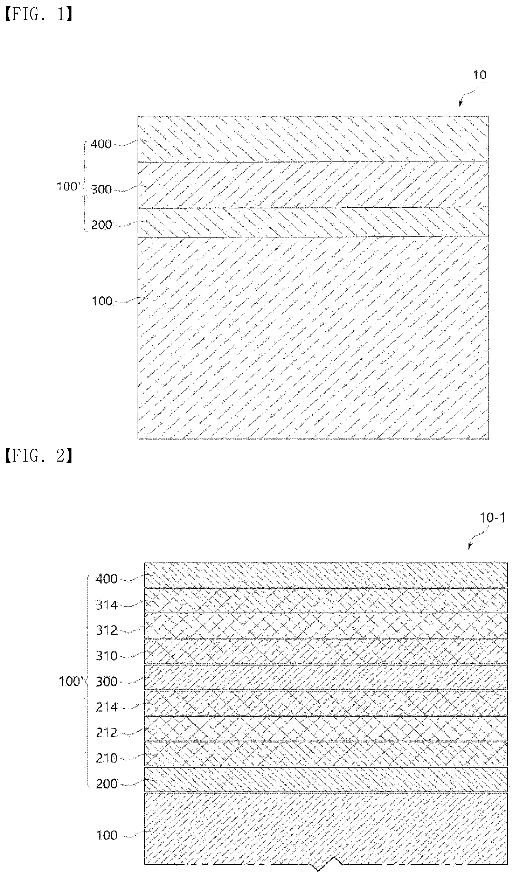

FIG. 1 schematically illustrates a filter fabric of a preferred embodiment of the present disclosure. The filter fabric 10 of the present embodiment may include a support layer 100 and a functional layer 100'. The support layer 100 may serve to support the functional layer 100'. Air may pass through the support layer 100 and the functional layer 100' and may be purified. Accordingly, the support layer 100 may be configured to allow air to pass through.

The support layer 100 may generally be made of a nonwoven fabric. Of course, the support layer 100 may also be formed of a woven fabric or a knitted fabric. That is, the support layer 100 may be made of various materials such as a nonwoven fabric or a woven fabric. When the support layer 100 is a nonwoven fabric, the support layer 100 may be made of a PET material and have a predetermined thickness.

Multiple functional layers 100' may be formed on the support layer 100. In addition, according to the present disclosure, the functional layer 100' may be formed by stacking nanofibers produced through nanofiber spinning. The functional layer 100' may include all or some combination of a base layer 200 that performs an adhesive function for the support layer 100, a purification layer 300 that performs actual air purification, and a protection layer 400 that protects the functional layer 100'.

Here, the formation of the functional layer 100' through nanofiber spinning is roughly explained. The filter fabric 10 of the present disclosure may have a predetermined area. Accordingly, the functional layer 100' constituting the filter fabric 10 may also have a predetermined area. In performing nanofiber spinning to form the functional layer 100', multiple rows of spinning nozzles may be used. For example, when the multiple rows of spinning nozzles having lengths corresponding to the width of the filter fabric 10 are sequentially arranged, nanofibers may be spun simultaneously over a predetermined area.

In this case, nanofibers may be spun from the same raw material through spinning nozzles in each row. In this way, the functional layers 100' may be formed to have a predetermined area. In this case, when the support layer 100 moves at a predetermined speed, the filter fabric 10 having predetermined width and length may be sequentially produced.

Meanwhile, in the present disclosure, compositions discharged from each row of spinning nozzles to form nanofibers may be different for each row. Alternatively, different compositions may be used in selected rows of spinning nozzles to spin nanofibers.

For example, when there are ten rows of spinning nozzles used to form the purification layer 300 and the nanofibers spun from the ten rows of spinning nozzles have the same compositions, the purification layer 300 may be formed to have uniform properties throughout. That is, the entire purification layer 300 may have uniform properties and performance.

However, the purification layer 300 may be formed to have multiple layers with slightly different compositions or properties, due to differences in the compositions of nanofibers spun from each row or from groups of several rows. For example, the purification layer 300 may be formed by stacking a certain amount of nanofibers with the same material composition to have uniform properties. Alternatively, the purification layer 300 may have the same thickness (i.e., the same amount of nanofibers) as in the previous case, but be divided into multiple layers made of nanofibers with different material compositions to form the purification layer 300. For example, the purification layer 300 may be formed of five layers, which are sub-layers, and each of these sub-layers may be made of materials with sequentially or differentially varying compositions.

In the embodiment illustrated in FIG. 1, the functional layer 100' may include the base layer 200, the purification layer 300, and the protection layer 40. However, the base layer 200, the purification layer 300, and the protection layer 400 do not necessarily have to be present together. For example, there may be only the purification layer 300 and the protection layer 400, or there may be only the base layer 200 and the purification layer 300.

The base layer 200 may also serve to bond the purification layer 300 to the support layer 100. Of course, since air passes through the base layer 200, the base layer 200 may also serve to capture foreign substances such as dust. When a function for oil vapor capture is added to the base layer 200, the base layer 200 may serve to capture oil vapor.

The purification layer 300 may be formed by being stacked on top of the base layer 200. The purification layer 300 may serve to capture dust and other substances in the air. The purification layer 300 may collect foreign substances such as dust, and may also capture odor particles depending on composition thereof.

The protection layer 400 formed by being stacked on the purification layer 300 may function to protect the entire functional layer 100'. The protection layer 400 may additionally have electric forces. The protection layer 400 may capture dust more effectively by having the electric forces.

The descriptions of the functions of the support layer 100, the base layer 200, the purification layer 300, and the protection layer 400 described herein are basically the same in other embodiments to be described below. Accordingly, in the embodiments below, repetitive descriptions thereof will be omitted. Additionally, the support layer 100, the base layer 200, the purification layer 300, and the protection layer 400 may have additional functions in addition to the basic functions described herein.

Meanwhile, in FIG. 1, it is not shown that the base layer 200, the purification layer 300, and the protection layer 400 constituting the functional layer 100' are composed of multiple sub-layers. However, in the embodiments illustrated in FIGS. 2 to 6, the functional layer 100' is illustrated as being composed of multiple sub-layers.

Next, an embodiment illustrated in FIG. 2 will be described. A filter fabric 10-1 in FIG. 2 has multiple sub-layers 210, 212, and 214, and 310, 312, and 314 between a base layer 200, a purification layer 300, and a protection layer 40 constituting the functional layer 100'. Practically, the sub-layers 210, 212, and 214 may be regarded as having the properties of both the base layer 100 and the purification layer 300, but in different proportions.

For example, the base layer 200 may have 100% of the properties of the base layer 200, and the purification layer 300 has 100% of the properties of the purification layer 300. However, the sub-layers 210, 212, and 214 may partially have the properties of both the base layer 200 and the purification layer 300. That is, various properties such as the additive content of a material constituting a nanofiber, the flow rate of a solution, and a voltage may differ between the base layer 200 and the first sub-layer 210, and the composition thereof may change sequentially or differentially from the first sub-layer 210 to the second sub-layer 212, and then to the third sub-layer 214.

For example, the first sub-layer 210 may have 80% of the properties of the base layer 200 and 20% of the properties of the purification layer 300. The second sub-layer 212 may have 50% of the properties of the base layer 200 and 50% of the properties of the purification layer 300. The third sub-layer 214 may have 20% of the properties of the base layer 200 and 80% of the properties of the purification layer 300.

In addition, the sub-layers 310, 312, and 314 between the purification layer 300 and the protection layer 400 may have properties of the purification layer 300 and the protection layer 400 that sequentially differ by a predetermined ratio. For example, the first sub-layer 312 may have 80% of the properties of the purification layer 300 and 20% of the properties of the protection layer 400. The second sub-layer 312 may have 50% of the properties of the purification layer 300 and 50% of the properties of the protection layer 400. The third sub-layer 314 may have 20% of the properties of the purification layer 300 and 80% of the properties of the protection layer 400.

In this way, in the embodiment illustrated in FIG. 2, the sub-layers 210, 212, and 214 between the base layer 200 and the purification layer 300 may respectively have properties changed sequentially through sequential composition changes to prevent abrupt changes. In addition, the sub-layers 310, 312, and 314 located between the purification layer 300 and the protection layer 400 may respectively have properties changed sequentially through sequential composition changes to prevent abrupt changes.

In the embodiment illustrated in FIG. 2, there are the multiple sub-layers 210, 212, and 214 between the base layer 200 and the purification layer 300, each having properties of the base layer 200 and the purification layer 300 in predetermined ratios, and there are the multiple sub-layers 310, 312, and 314 between the purification layer 300 and the protection layer 400, each having properties of the purification layer 300 and the protection layer 400 in predetermined ratios.

In FIG. 2, between the base layer 200, the purification layer 300, and the protection layer 400 that constitute the functional layer 100', the multiple sub-layers 210, 212, and 314, and the multiple sub-layers 210, 212, and 314 may respectively be sequentially formed of materials with different compositions to prevent the occurrence of interfacial effects.

In FIG. 2, there are three sub-layers 210, 212, and 214 and three sub-layers 210, 212, and 314, respectively. However, there may also be two or four sub-layers, respectively. However, when the number of sub-layers becomes too large, manufacturing may become difficult.

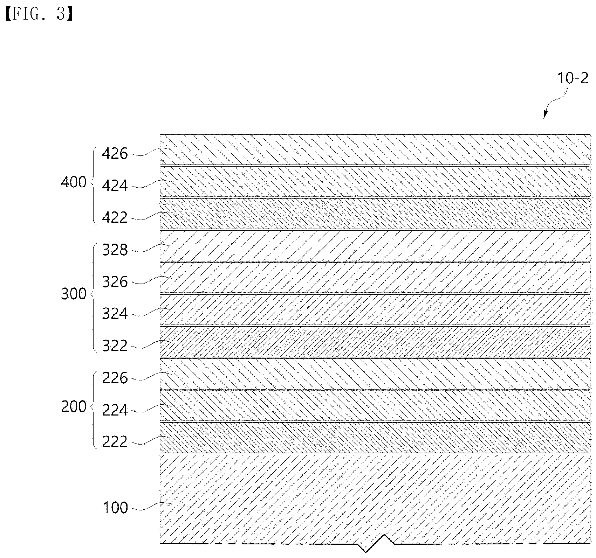

Next, an embodiment illustrated in FIG. 3 will be described. FIG. 3 is a cross-sectional view showing another embodiment of a filter fabric 10-2, in which sub-layers 222, 224, and 226, and 422, 424, and 426 are configured to have sequential properties, with emphasis placed on moisture resistance and oil vapor capture capability.

In the embodiment illustrated in FIG. 3, a base layer 200, a purification layer 300, and a protection layer 400, which constitute the functional layer 100', are formed in sequence on a support layer 100.

In this case, the base layer 200 may be divided into three sub-layers 222, 224, and 226. Here, the base layer 200 may be formed of a material with excellent oil vapor capture properties, such as poly lactic acid (PLA) polymer, and the sub-layers 222, 224, and 226 may be configured with oil vapor capture properties thereof varying sequentially. That is, the first sub-layer 222 may have the highest oil vapor capture capability, and the second sub-layer 224 may have a slightly lower oil vapor capture capability than the first sub-layer 222. In addition, the third sub-layer 226 may have a lower oil vapor capture capability than the second sub-layer 224.

Meanwhile, the purification layer 300 may include four sub-layers 322, 324, 326, and 328. Here, there may be differences in dust capture capacity. However, to maximize the dust collection function of the purification layer 300, each of the sub-layers 322, 324, 326, and 328 may be configured without differences in dust collection capacity. Accordingly, in FIG. 3, the sub-layers 322, 324, 326, and 328 constituting the purification layer 300 may be regarded as having the same compositions, so that the purification layer 300 as a whole may practically have uniform properties.

The cover layer 400 may be divided into three sub-layers 422, 424, and 426, and for example, a contact angle thereof with distilled water may be sequentially changed to improve water-repellent properties. Here, the cover layer 400 may be made of a material with good water-repellent properties, such as polystyrene (PS) or polyvinylidene fluoride (PVDF). In addition, the contact angle of the first sub-layer 422 with distilled water may be set to 10° or less, the contact angle of the second sub-layer 424 with distilled water may be set to about 60°, and the contact angle of the third sub-layer 426 with distilled water may be set to about 110°.

In the embodiment illustrated in FIG. 3, sub-layers 222, 224, and 226, 322, 324, 326, and 328, and 422, 424, and 426 are arranged according to the purpose or specifications of a filter. In this embodiment, the most important consideration is to sequentially arrange the sub-layers so that interface effects do not occur and to focus on oil vapor capture capacity and moisture absorption blocking.

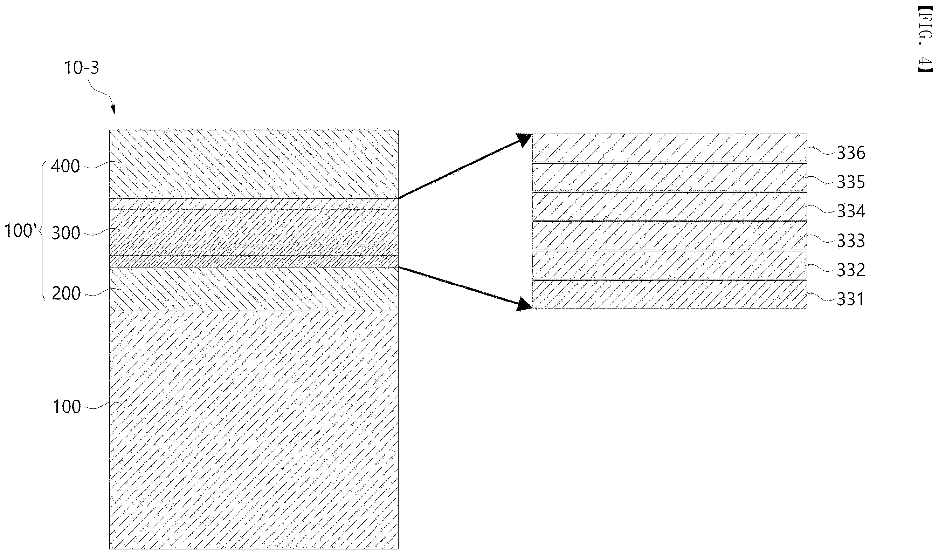

Next, FIG. 4 shows an embodiment in which electric conductivities are sequentially varied so that the electric force of a filter fabric 10-3 can be maintained for a long time. In this way, dust collection performance by an electric force may be maintained for a long time. Here, the functional layer 100' may be formed on a support layer 100, and a purification layer 300 of the functional layer 100' may be formed by being divided into multiple sub-layers 331, 332, 333, 334, 335, and 336. In this case, the sub-layers 331, 332, 333, 334, 335, and 336 may be configured so that electrical conductivities thereof gradually decrease from the first sub-layer 331 to the last sub-layer 336. In particular, the sub-layer 366 adjacent to the protection layer 400 may be set to have the lowest electrical conductivity.

In this case, the protection layer 400 may have properties of a high electric force. When the protection layer 400 has properties of a high electric force, dust collection capability may increase relatively, but when the electrical conductivity of the purification layer 300 adjacent to the protection layer 400 is high, electricity from the protection layer 400 may flow through the purification layer 300, easily lowering the electric force and thus the dust collection properties by the electric force may gradually deteriorate.

However, according to the present disclosure, while the properties of the purification layer 300 are maintained, the electric conductivities of the sub-layers 336, 335, 334, 333, 332, and 331 adjacent to the protection layer 400 may be relatively low, and the electric conductivities may be sequentially increased as each of the sub-layers is located away from the protection layer 400. Accordingly, while properties that the purification layer 300 is required to have are maintained, the sub-layers 336, 335, and 334 of the purification layer 300 adjacent to the protection layer 400 have relatively low electrical conductivities, so that the electric force of the protection layer 400 may be maintained for a long time.

Here, the electrical conductivity of the sub-layer 331 may be set to about 400 to 800 uS, and the electrical conductivity of the sub-layer 336 may be set to about 100 to 200 uS. The electrical conductivities of the sub-layers 332, 333, 334, and 335 therebetween may sequentially vary.

In this embodiment, the electrical conductivity of the purification layer 300 may vary depending on the type or amount of additives in its constituent materials. However, as a material constituting the purification layer 300, another material having low electrical conductivity may be used.

In this embodiment of this configuration, dust collection performance by an electric force may not change much between the initial and later stages of use of the filter, so that almost constant dust collection performance may be provided. The key point of this embodiment is to place nanofibers with a large amount of additives in the support layer 100, to place nanofibers with high electric force in the protection layer 400 far from the support layer 100, and to gradually increase the electric conductivities of the sub-layers 336, 335, 334, 333, 332, and 331 therebetween, so that the electric force of the protection layer 400 may be maintained for a relatively long time.

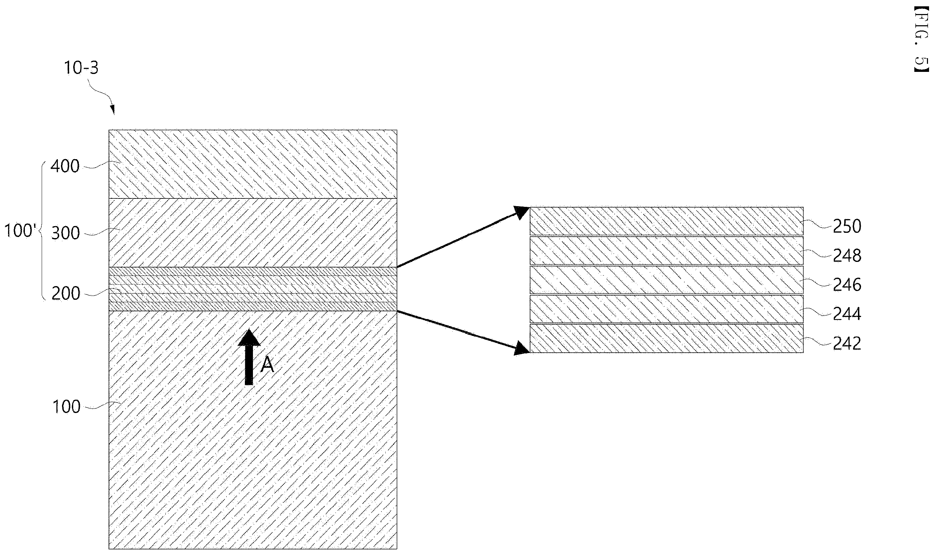

FIG. 5 illustrates a filter fabric 10-4 according to another embodiment of the present disclosure. Here is an example of the filter fabric 10-4 for use in an area with a lot of oil vapor. For example, the filter fabric may be used in kitchens, barbecue restaurants, and roadside purification facilities. In FIG. 5, the filter fabric 10-4 is designed so that the direction in which air passes therethrough is set in the direction of arrow A (an airflow direction). This is to prevent contaminants such as oil vapor from adhering to a functional layer 100'. More specifically, the filter fabric is designed so that a support layer 100 or a base layer 200 absorbs an oil vapor in advance before the oil vapor reaches a purification layer 300 or a protection layer 400.

When air passes through the support layer 100 first due to the airflow direction design, adhesive force may be a primary consideration, and the properties of the base layer 200 may take precedence. To this end, sub-layers 242, 233, 246, 248, and 250 are formed by adjusting the amount of materials according to the properties of the base layer 200.

That is, in forming the base layer 200 positioned between the support layer 100 and the purification layer 300 as the multiple sub-layers 242, 233, 246, 248, and 250, the sub-layers 242 and 250 in contact with the other layers (the support layer 100 and the purification layer 300) may be configured to retain the original properties of the base layer 200, while the remaining sub-layers 244, 246, and 248 positioned therebetween may be formed by using materials with a relatively higher amount of substances (such as PLA) capable of increasing an oil vapor-containing amount. For example, the first and last sub-layers 242 and 250 may be made by using a material and a method that provide good adhesion, regardless of the oil vapor-containing amount. In addition, the sub-layers 244, 246, and 248 may be made by sequentially or differently including materials with good oil vapor-containing capacity.

The first and last sub-layers 242 and 250 may be made of materials that provide 100% adhesion properties but have 0% oil vapor-containing properties. The sub-layer 244 may have 60% adhesion properties and 40% oil vapor-containing properties, the sub-layer 246 may have 40% adhesion properties and 60% oil vapor-containing properties, and the sub-layer 248 may have 60% adhesion properties and 40% oil vapor-containing properties.

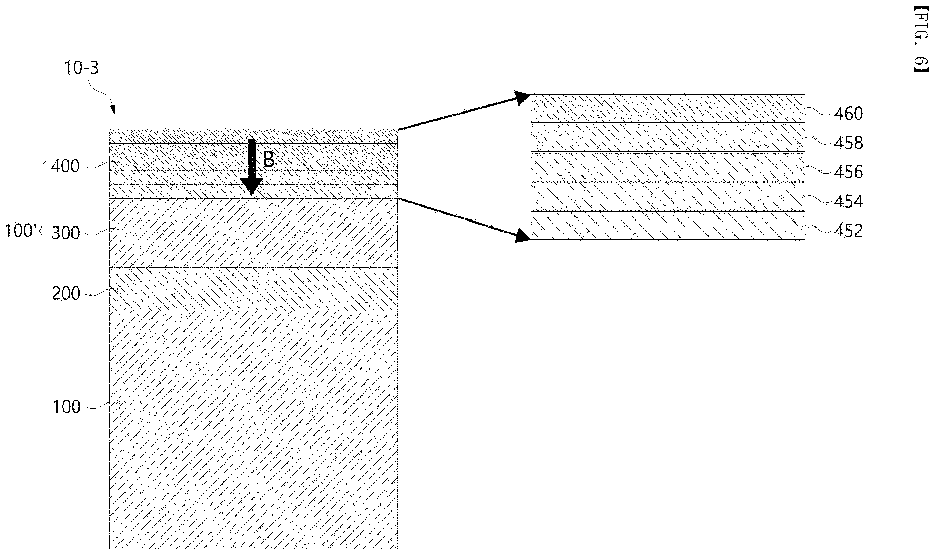

FIG. 6 illustrates a filter fabric 10-5 of another embodiment of the present disclosure. Here is an example of the filter fabric 10-5 for use in an area with high moisture content. For example, the filter fabric may be used in coastal areas, areas with high rainfall and humidity, etc. In FIG. 6, the design of the filter fabric 10-5 is based on an airflow direction. In FIG. 6, the air flow direction is set in the direction of arrow B. More specifically, the airflow direction B is set and designed so that moisture may be transferred to a purification layer 300 or a base layer 200 to a minimum.

In this embodiment, the protection layer 400 is formed by being divided into multiple sub-layers 452, 454, 456, 458, and 460. In this embodiment, a material of which the protective layer 400 is formed may be a material having good water-repellent properties, such as polystyrene (PS) or polyvinylidene fluoride (PVDF).

In this case, the electrostatic force of the protection layer 400 may gradually decrease from the first sub-layer 452 to the last sub-layer 460. However, for the water repellency, the last sub-layer 460 may have the greatest water repellency and the first sub-layer 452 may have the lowest water repellency.

For example, in the first sub-layer 452, the ratios of electrostatic properties and water-repellent properties may be 100% and 0%, respectively, and in the second sub-layer 454, the ratios of electrostatic properties and water-repellent properties may be 75% and 25%, respectively. In the third sub-layer 456, the ratios of electrostatic properties and water-repellent properties may be 50% and 50%, respectively. In the fourth sub-layer 458, the ratios of electrostatic properties and water-repellent properties may be 25% and 75%, respectively. In the last sub-layer 460, the ratios of electrostatic properties and water-repellent properties may be 0% and 100%, respectively.

As in this embodiment, with regard to moisture, an airflow direction may be taken into consideration to reduce moisture exposure starting from the outermost layer. That is, it is characterized that moisture is blocked so that the moisture does not cause problems when passing through the filter fabric 10-5. This configuration may be different from the case of the oil vapor. In an example where a filter fabric is used in an area with a lot of oil vapor, the priority is to ensure that a large amount of oil vapor, which is a pollutant, is captured by the filter fabric. However, in the case of moisture, priority is given to preventing moisture from adhering to a filter fabric.

Meanwhile, although not shown in the drawing, in a case in which moisture and oil vapor must be considered together, it is a priority to arrange the sub-layer with moisture-related properties upstream in an airflow direction. This is to prevent the functions of other functional layers 100' from being lost due to moisture.

The use of the filter fabric of the present disclosure having the configuration described above will now be described.

The filter fabrics 10, 10-1, 10-2, 10-3, 10-4, and 10-5 described above are partially shown in cross-section views in each of the drawings. These filter fabrics 10, 10-1, 10-2, 10-3, 10-4, and 10-5 may be installed in a filter frame with various structures. For example, the frame may be configured to form the filter fabrics 10, 10-1, 10-2, 10-3, 10-4, and 10-5 into a cylindrical shape. In this case, the filter fabrics 10, 10-1, 10-2, 10-3, 10-4, and 10-5 may be repeatedly folded in a zigzag pattern, forming an overall cylindrical shape. In this way, the filter fabrics 10, 10-1, 10-2, 10-3, 10-4, and 10-5 may be installed in the frame to form one filter. In addition, the filter fabrics 10, 10-1, 10-2, 10-3, 10-4, and 10-5 may installed in an airflow path within the filter so that air passes through them, allowing the filter fabrics to perform the function of capturing foreign substances.

According to the present disclosure, each functional layer 100' is characterized by being divided into multiple sub-layers. For example, depending on differences in properties between the base layer 200 and the purification layer 300, the purification layer 300 may be formed into multiple sub-layers to address issues such as increased pressure loss at the interface between the base layer 200 and the purification layer 300 so that interfacial effects do not occur between the sub-layers of the purification layer 300 adjacent to the base layer 200 and the base layer 200.

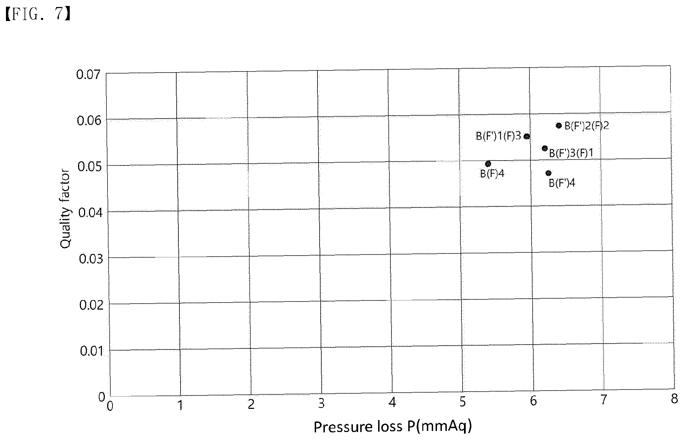

FIG. 7 shows the results of an experiment conducted by using a sequential electrical conductivity stacking method. Here, the base layer 200 is denoted as B, the purification layer 300 is denoted as F, and sub-layers with different properties sequentially within the purification layer 300 are denoted as F' layers. Accordingly, in fact, F and F' may be regarded as sub-layers that constitute the purification layer 300.

The graph experimentally shows a relationship between pressure loss (P) and quality factor (QF) for filter fabrics consisting of B(F)4, B(F')4, B(F')3(F)1, B(F')1(F)3, and B(F')2(F)2.

Here, the filter fabric indicated as B(F)4 has one base layer (B) of a predetermined thickness and four purification layers (F) of a predetermined thickness. Here, the four purification layers (F) have the same properties and may be viewed as one purification layer (P) with a thickness four times that of the base layer (B).

The filter fabric labeled B(F')4 uses purification layers (F') that have slightly different properties from the purification layers (F). In effect, it may be seen that the thickness of one purification layer (F') is four times that of the base layer (B).

In the filter fabric indicated as B(F')3(F)1, the base layer (B) may have three purification layers (F') and one purification layer (F). The purification layers (F, F') may be regarded as being configured as multiple sub-layers.

In the filter fabric indicated as B(F')1(F)3, the base layer (B) may have one purification layer (F') and three purification layers (F). Here, the purification layers (F, F') may also be regarded as being configured as multiple sub-layers.

Finally, in the filter fabric labeled B(F')2(F)2, the base layer (B) may have two purification layers (F') and two purification layers (F). Here, each of the purification layers (F, F') may also be considered as being configured as two sub-layers.

An experiment was conducted by using the filter fabric with the above configuration, where the quality factor (QF) is a factor that expresses efficiency according to the pressure loss (P), and may be expressed as QF = -log(E)/ΔP. E represents the efficiency of the filter fabric, and P represents the pressure loss.

Looking at the equation above, the quality factor QF is proportional to the efficiency (E) and inversely proportional to the pressure loss (P). Accordingly, when the pressure loss is the same, the higher the QF, the more efficient the filter fabric is, and when the QF is the same, the lower the pressure loss (P) is, the more efficient the filter fabric is.

From this perspective, looking at FIG. 7, the filter fabric having the purification layers (F, F') as the sub-layers shows better efficiency than other filter fabrics, while being located relatively on the upper right side of the graph, compared to cases where only the purification layer (F) or only the purification layer (F') is used. In summary, it can be seen that when configuring the filter fabrics 10, 10-1, 10-2, 10-3, 10-4, and 10-5, placing sub-layers can relatively increase efficiency.

In the above, even though all the components of the present disclosure according to the embodiments have been described as being combined or operating in combination as one, the present disclosure is not necessarily limited to these embodiments. That is, within the scope of the objectives of the present disclosure, all of the components may be selectively combined to operate in one or more combinations.

## Claims

1. A filter fabric comprising:
a support layer,
functional layers that are formed by being sequentially stacked on the support layer and have predetermined functions,
wherein at least one of the functional layers comprises multiple sub-layers having different compositions or properties.

2. The filter fabric of claim 1, wherein the functional layers are made by stacking nanofibers produced through nanofiber spinning.

3. The filter fabric of claim 1, wherein the functional layer comprises at least one of a base layer, a purification layer, and a protection layer.

4. The filter fabric of claim 1, wherein the sub-layers have material compositions that vary sequentially.

5. The filter fabric of claim 1, wherein each of the sub-layers has a material composition different from a material composition of an adjacent sub-layer.

6. The filter fabric of claim 1, wherein the sub-layers are set to have sequentially different electrical conductivities.

7. The filter fabric of claim 1, wherein multiple sub-layers that share properties of adjacent functional layers are provided between the functional layers.

8. The filter fabric of claim 7, wherein multiple sub-layers that share properties of adjacent functional layers are formed by sequentially varying ratios of the properties of the functional layers between the functional layers.

9. A filter fabric comprising:
a support layer,
functional layers that are formed by being sequentially stacked on the support layer and have predetermined functions,
wherein multiple sub-layers that sequentially share properties of adjacent functional layers are formed between the functional layers.

10. The filter fabric of claim 9, wherein each of the functional layers comprises a base layer made of nanofibers formed through nanofiber spinning on the support layer, a purification layer made of nanofibers formed through nanofiber spinning on the base layer, and a protection layer made of nanofibers formed through nanofiber spinning on the purification layer, wherein sub-layers that sequentially share properties of the base layer and the purification layer are formed between the base layer and the purification layer, and sub-layers that sequentially share properties of the purification layer and the protection layer are formed between the purification layer and the protection layer.

11. A filter fabric comprising:
a support layer,
a base layer formed of nanofibers formed through nanofiber spinning, with the base layer formed on the support layer, capable of capturing oil vapor, and composed of multiple sub-layers having different oil vapor capture capabilities,
a purification layer formed on the base layer, and
a protection layer formed on the purification layer and composed of multiple sub-layers having different water repellencies.

12. The filter fabric of claim 11, wherein the sub-layers of the base layer are formed to have sequentially different oil vapor capture capabilities, and a sub-layer adjacent to the support layer is formed to have a greater oil vapor capture capability than other sub-layers.

13. The filter fabric of claim 12, wherein the sub-layers of the protection layer are formed to have sequentially different water repellencies, and a water repellency of an outermost sub-layer among the sub-layers of the protection layer is greatest.

14. A filter fabric comprising:
a support layer,
a protection layer formed on the support layer,
a purification layer formed on the protection layer and composed of multiple sub-layers having different electrical conductivities, and
a protection layer formed on the purification layer and having an electric force.

15. The filter fabric of claim 14, wherein among multiple sub-layers constituting the purification layer, electrical conductivity increases sequentially from a sub-layer adjacent to the protection layer to a sub-layer adjacent to the protection layer.

16. The filter fabric of claim 15, wherein the base layer, the purification layer, and the protection layer are formed by stacking nanofibers formed through nanofiber spinning.

17. A filter comprising:
a filter frame, and
the filter fabric of claims 1 to 16 which is installed on the filter frame and allows air to pass therethrough so that the air is purified.
